# EUROPÄISCHE PATENTSCHRIFT

(11) **EP 0 759 668 B1**
(45) Veröffentlichungstag und Bekanntmachung des Hinweises auf die Patenterteilung: **28.04.2004**
(21) Anmeldenummer: 96112243.9
(22) Anmeldetag: 29.07.1996
(51) Int. Cl.: H04J 14/08, H04B 10/213, H04J 14/02

(54) **Optisches TDMA-Ringnetz mit einer zentralen Sende- und Empfangseinrichtung**
Optical TDMA ring network with a central transmission receiving device
Réseau optique à AMRT avec un dispositif central de transmission et de réception

(30) Priorität: 10.08.1995 DE 19529376
(43) Veröffentlichungstag der Anmeldung: 26.02.1997
(73) Patentinhaber: ALCATEL, 75008 Paris (FR)
(72) Erfinder: Pfeiffer, Thomas, Dr., 70569 Stuttgart (DE)
(74) Vertreter: Schätzle, Albin, Dipl.-Phys.

(56) Entgegenhaltungen:
- EP-A- 0 385 430
- EP-A- 0 654 917
- WO-A-95/10870

## Beschreibung

Die Erfindung betrifft ein optisches Ringnetz gemäß dem Oberbegriff des Anspruchs 1 und eine optische Add-Drop-Einrichtung gemäß dem Oberbegriff des Anspruchs 2.

Optische Netze sind hinreichend bekannt. So ist z. B. aus der Veröffentlichung von F. Tillerot et al, "Introduction of the WDM Technique in SDH Networks ", International Switching Symposium ISS'95, April 1995, Vol. 2, Beitrag C 7.5, Seiten 391 bis 396 ein optisches Netz bekannt, bei dem zwei Netzelemente (Node 1, Node 2) und ein zentrales Netzelement (Central Node) als Ring angeordnet sind (Fig. 5). Das zentrale Netzelement hat einen Sende- und einen Empfangsteil. Der Sendeteil besteht aus vier Multielektroden DFB Laserdioden, die Licht unterschiedlicher Wellenlängen (vier Wellenlängen) aussenden, so daß damit mindestens vier Netzelemente adressiert werden können. In jedem Netzelement gibt es ebenfalls einen Sende- und einen Empfangsteil, die mit einem Add-Drop Multiplexer verbunden sind. Eine im Sendeteil des ersten Netzelements (Node 1) vorhandene Laserdiode sendet Licht einer fünften Wellenlänge aus, und eine im Sendeteil des zweiten Netzelements (Node 2) vorhandene Laserdiode sendet Licht einer sechsten Wellenlänge aus.Diese sechs Laserdioden erzeugen Licht mit einem in Fig. 6 gezeigten optischen Leistungsspektrum. Unterschiede in der optischen Leistung zwischen Licht unterschiedlicher Wellenlängen werden mit einer Wellenlängenabhängigkeit der Verstärkung eines faseroptischen Verstärkers (EDFA) erklärt.

Ein solches optisches Ringnetz ist für eine Signalübertragung im kombinierten Zeit- und Wellenlängen-Multiplexverfahren (T/WDM) geeignet: Eine Teilnehmeranschlußeinheit und eine Netzzugangseinrichtung dafür sind in Fig. 7 und Fig. 8 gezeigt.

Auf dem Gebiet der optischen Übertragungstechnik besteht allgemein der Wunsch, die Bitfolgefrequenz der optischen Signale, z. B. in dem genannten T/WDM Ringnetz, weiter zu erhöhen, z. B. auf über 10 Gbit/s. Dabei treten jedoch mehrere technische Probleme auf. So müssen die Laserdioden in der Lage sein, kurze optische Impulse (< 100 ps bei 10 Gbit/s) zu erzeugen. Damit steigen die Anforderungen an die Laserdioden und damit auch die Kosten des optischen Netzes. Außerdem ist ein besonderes Augenmerk auf die verwendete Wellenlänge zu legen: Die Wellenlängen der optischen Signale, die die einzelnen Laserdioden aussenden, dürfen nicht zu weit auseinanderliegen, da die optischen Signale, insbesonders bei einer hohen Bitfolgefrequenz, ähnlichen Ausbreitungsbedingungen hinsichtlich der Dispersion unterliegen sollen. Außerdem müssen die Wellenlängen bei der genannten hohen Bitfolgefrequenz nahe der Dispersionsnullstelle des Lichtwellenleiters liegen. Dies macht eine aufwendige Selektion der Laserdioden erforderlich.

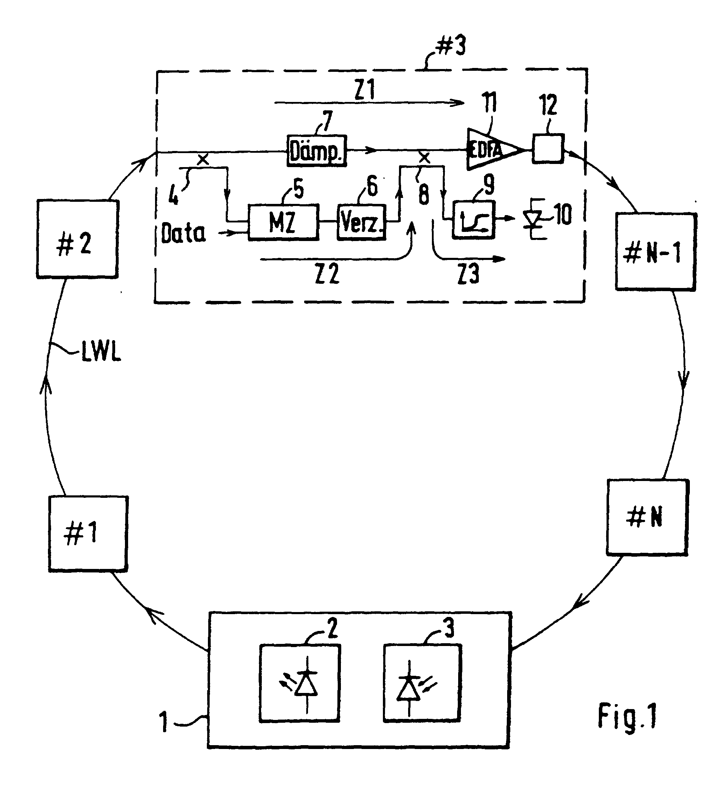

Ein optisches Netz, bei dem nur eine einzige Laserdiode benötigt wird, ist aus der Veröffentlichung von M. Leich et al, "Optical LAN using distance multiplexing and reflection modulation", Electronics letters, 1st September 1994, Vol. 30, No. 18, Seiten 1506 bis 1507 bekannt. Dieses optische Netz hat die Struktur eines Sterns, d. h. die einzige Laserdiode ist zentral bei einem reflektierenden Sternkoppler (reflective star coupler) angeordnet, der durch jeweils einen Lichtwellenleiter mit mehreren Netzelementen verbunden ist. Die Netzelemente sind auf konzentrischen Kreisen um den reflektierenden Sternkoppler angeordnet (Fig. 1). Jedes Netzelement ist demnach unterschiedlich weit vom reflektierenden Sternkoppler entfernt. Dadurch kann in diesem optischen Netz eine Signalübertragung im Zeitmultiplexverfahren (TDMA) erfolgen. Ein an einem Netzelement ankommender Impuls wird moduliert und zum reflektierenden Sternkoppler reflektiert. Dafür hat jedes Netzelement einen Empfänger und einen Sender, denen jeweils ein Teil des ankommenden Impulses zugeführt wird; durch den Sender und Empfänger wird eine Add-Drop-Funktion geschaffen.

Der Sender hat ein optisches Amplitudenfilter (NLMZI), eine Verzögerungsleitung (DL), einen elektrooptischen Schalter (EOS) und einen Reflektor. Der Empfänger hat ebenfalls ein optisches Amplitudenfilter (NLMZI), eine Verzögerungsleitung (DL), ein optisches UND Gatter und einen Photodetektor (PD). Durch die Verzögerungsleitungen können die Entfernungen zu dem zentralen reflektierenden Sternkoppler angepaßt werden, so daß jedes Netzelement Zugang zu "seinem" Zeitschlitz hat.

Die in diesem optischen Netz, bei dem nur eine Laserdiode (und damit nur Licht einer Wellenlänge) benötigt wird, beschriebenen Einrichtungen, d.h. reflektierenden Sternkoppler, Sender und Empfänger sind nur in einem solchen optischen Sternnetz einsetzbar, ein optisches Ringnetz ist mit ihnen nicht realisierbar.

Bei optischen Netzen (Ringnetz, Sternnetz) werden Add-Drop-Einrichtungen verwendet, um in einem Netzelement Information aus einem optischen Datenstrom auszukoppeln und in den optischen Datenstrom einzukoppeln.Eine rein optisch arbeitende Add-Drop-Einrichtung ist aus der Patentschrift EP-B1-0 385 430 bekannt. Der Add-Teil dieser Add-Drop-Einrichtung besteht u. a. aus einer optischen Zeiteinstelleinrichtung (timing adjusting means), einer optischen Impulsbreitenreduziereinrichtung (pulse width reducing means), und einem optischen Sender. In der optischen Zeiteinstelleinrichtung ist eine Rahmenerkennungsschaltung (frame extracting circuit) vorhanden, um einen Rahmenimpuls aus einem Puls zu gewinnen. Es wird ein optisches Filter verwendet, um dem optischen Rahmenimpuls eine eigene Wellenlänge zuzuordnen. Die Impulsbreitenreduziereinrichtung hat ein optisches Schwellenelement (threshold element), das nur dann einen optischen Ausgangspegel hat, wenn der optische Eingangspegel einen Schwellenwert überschreitet. Der Drop-Teil der Add-Drop-Einrichtung besteht aus einer Impulsbreitenerweiterungseinrichtung (puls width expanding means), die mit der optischen Zeitangleicheinrichtung verbunden ist, und einem optischen Empfänger. Die Impulsbreitenerweiterungseinrichtung enthält ebenfalls ein optisches Schwellenelement.

Die im vorhergehenden kurz beschriebene bekannte optische Add-Drop Einrichtung erzeugt intern einen optischen Rahmenimpuls. Dafür ist die optische Zeiteinstelleinrichtung notwendig, in der das optische Filter und ein Verzögerungsteil vorhanden sind.

Eine Aufgabe der Erfindung ist, ein optisches Ringnetz anzugeben, bei dem die genannte aufwendige Selektion der Laserdioden bezüglich der Wellenlängen nicht notwendig ist und eine einfache Add-Drop-Einrichtung verwendbar ist. Ein solches optisches Ringnetz ist Gegenstand des Patentanspruchs 1 und die Add-Drop-Einrichtung ist Gegenstand des Patentanspruchs 2. Vorteilhafte Ausgestaltungen der Erfindung sind in den Unteransprüchen angegeben.

Ein Vorteil der Erfindung ist, daß ein in einem Netzelement vorhandener elektrooptischer Modulator nur für eine geringe Bitfolgefrequenz ausgelegt zu sein braucht, obwohl ein im optischen Ringnetz übertragener Datenstrom eine hohe Bitfolgefrequenz von z. B. 10 Gbit/s hat.

Außerdem ist es ein Vorteil, daß nachträgliche Änderungen am optischen Ringnetz möglich sind, ohne daß einzelne Netzelemente ausgetauscht werden müssen. Es reicht z. B. aus, den einzigen im zentralen Netzelement vorhandenen Laser so anzupassen, daß dieser kürzere optische Impulse aussendet, um damit die Bitfolgefrequenz des Datenstroms im Ringnetz durch Hinzufügen von weiteren Netzelementen zu erhöhen.

Die Erfindung wird im folgenden anhand von Figuren näher erläutert. Es zeigen:
- Fig. 1: ein schematisches optisches Ringnetz,
- Fig. 2: ein Diagramm eines Zeitmultiplexsignals.

Fig. 1 zeigt ein schematisches optisches Ringnetz, bei dem ein zentrales Netzelement 1 und mehrere Netzelemente #1, ..., #N durch einen Lichtwellenleiter LWL verbunden sind. Das zentrale Netzelement 1 wird im folgenden als Zentrale bezeichnet, die eine Sende- und Empfangseinrichtung ist. Dafür hat die Zentrale 1 einen optischen Sender 2 und einen optischen Empfänger 3, die mit dem Lichtwellenleiter LWL so verbunden sind, daß vom optischen Sender 2 ausgesendetes Licht in ein Ende des Lichtwellenleiters LWL eingekoppelt wird, und am anderen Ende des Lichtwellenleiters LWL vom optischen Empfänger 3 empfangen wird. Der optische Sender 2 hat z. B. eine Laserdiode (z. B. einen DFB-Laser), die idealerweise monochromatisches Licht aussendet, und eine die Laserdiode steuernde Steuer- und Regeleinrichtung, die in Fig. 1 nicht gezeigt ist. Alternativ zur Laserdiode kann auch ein faseroptischer Laser oder eine andere monochromatisches Licht aussendende Lichtquelle eingesetzt werden. Die Laserdiode wird so gesteuert, daß das ausgesendete Licht eine Folge von optischen Impulsen ist. Ein Maß für den zeitlichen Abstand der einzelnen optischen Impulse ist die Impulsfolgefrequenz.

Wie im folgenden noch genauer erläutert wird, wird im optischen Ringnetz erfindungsgemäß nur eine einzige Laserdiode benötigt; der optische Sender 2 und die darin enthaltene Laserdiode sind deshalb u. a. so zu wählen, daß die gewählte Impulsfolgefrequenz konstant ist, daß die Wellenlänge des ausgesendeten Lichts auf den verwendeten Lichtwellenleiter LWL und an eventuell vorhandene faseroptische Verstärker optimal angepaßt ist, und daß die Dauer der einzelnen optischen Impulse möglichst gering ist. Werte für solche Parameter sind z. B.: Eine Impulsfolgefrequenz von 155 MHz, so daß sich ein "Zeitfenster" von 6,43 ns ergibt, eine Wellenlänge von 1,55µm und eine Impulsdauer von < 100 ps.

Bei dem gezeigten optischen Ringnetz ist es nicht unbedingt notwendig, daß es sich um einen geschlossenen Ring handelt. Die Erfindung ist selbstverständlich auch bei einem nicht geschlossenen Ring anwendbar: In diesem Fall ist der optische Sender 2 räumlich getrennt von dem optischen Empfänger 3 angeordnet; auch dann ist nur einen einzige Laserdiode notwendig.

In dem in Fig. 1 gezeigten optischen Ringnetz hat jedes Netzelement #1, ..., #N eine Add-Drop-Einrichtung, die im Netzelement #3 beispielsweise für alle Netzelemente #1, ..., #N schematisch dargestellt ist. Durch diese Add-Drop-Einrichtung können an einem Netzelement #1, ..., #N optische Impulse (Datenbits) selektiv zu einem optischen Datenstrom hinzugefügt oder aus diesem entnommen werden. Der aus optischen Impulsen bestehende optische Datenstrom hat demnach eine Bitfolgefrequenz (z. B. 10 Gbit/s), die größer als die Impulsfolgefrequenz (155 MHz) ist.

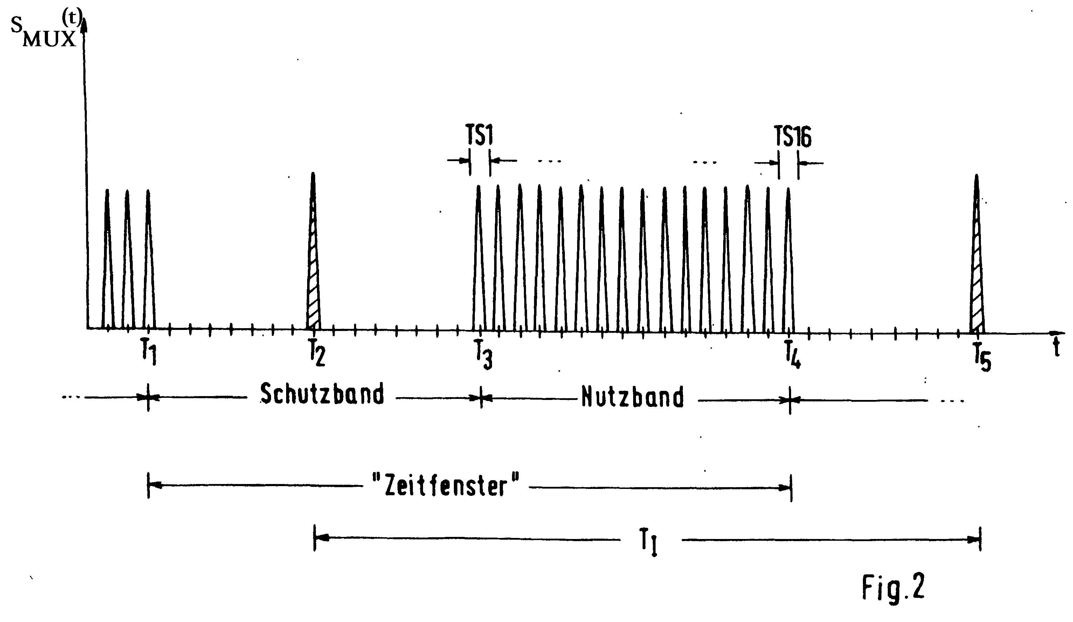

Im folgenden wird der Aufbau der im Netzelement #3 gezeigten Add-Drop-Einrichtung erläutert, bevor die Funktionsweise des gesamten optischen Ringnetzes in Verbindung mit Fig. 2 erklärt wird.

In den Lichtwellenleiter LWL ist ein optischer Verzweiger 4 eingefügt, der zwei Ausgänge hat, um so den an einem Eingang des Netzelements #3 ankommenden optischen Datenstrom auf zwei Zweige Z1, Z2 aufzuteilen: Ein Ausgang ist mit einem Eingang einer optischen Dämpfungseinrichtung 7 verbunden und ein weiterer Ausgang ist mit einem Eingang eines optischen Schalters 5 verbunden. Einem weiteren Eingang des optischen Schalters 5 kann ein Steuersignal, das in Fig. 1 als Data bezeichnet ist, zugeführt werden. Ein Ausgang des optischen Schalters 5 ist mit einem Eingang einer optischen Verzögerungseinrichtung 6 verbunden, die ausgangsseitig mit einem Eingang eines optischen Kopplers 8 verbunden ist. Ein weiterer Eingang des optischen Kopplers 8 ist mit einem Ausgang der optischen Dämpfungseinrichtung 7 verbunden. Ein Ausgang des optischen Kopplers 8 ist mit einem optischen Entscheider 9 verbunden, der ausgangsseitig mit einem Photodetektor 10 verbunden ist. Ein weiterer Ausgang des optischen Kopplers 8 ist mit einem optischen Verstärker 11 verbunden, der in Fig. 1 als EDFA bezeichnet ist. Ein Ausgang des optischen Verstärkers 11 ist mit einem optischen Begrenzer 12 verbunden, der mit dem Lichtwellenleiter LWL verbunden ist. Dadurch ist ein Ausgang des Netzelements #3 mit dem nächsten Netzelement #N-1 verbunden.

Durch den optischen Koppler 8 wird in der Add-Drop-Einrichtung ein dritter Zweig Z3 festgelegt, in dem der optische Entscheider 9 und der Photodetektor 10 als Detektionsmittel vorhanden sind. Der Photodetektor 10 wandelt empfangene optische Impulse in elektrische Impulse um, die in einer nicht gezeigten Signalverarbeitungseinrichtung ausgewertet werden.

In Fig. 1 sind die durch den optischen Verzweiger 4 und den optischen Koppler 8 gebildeten Zweige Z1, Z2, Z3 eingezeichnet. Der Zweig Z1 verbindet den Eingang des Netzelements #3 mit dem Ausgang des Netzelements #3. In den Zweig Z1 sind die optische Dämpfungseinrichtung 7, der optische Verstärker 11 und der optische Begrenzer 12 eingefügt: Die optische Dämpfungseinrichtung 7 zwischen dem optischen Verzweiger 4 und dem optischen Koppler 8, und der optische Verstärker 11 und der optische Begrenzer 12 zwischen dem optischen Koppler 8 und dem Ausgang des Netzelements #3.

Der Zweig Z2 verbindet einen Ausgang des optischen Verzweigers 4 mit einem Eingang des optischen Kopplers 8; in diesen Zweig Z2 sind der optische Schalter 5 und die Verzögerungseinrichtung 6 als Modulationsmittel eingefügt.

Die in der Add-Drop-Einrichtung verwendeten Einrichtungen sind hinreichend bekannt, so daß diese nur kurz erläutert werden, eventuell mit Hilfe eines Verweises auf eine Veröffentlichung:
- Der optische Verzweiger 4 und der optische Koppler 8 sind z. B. 3dB-Faserkoppler (s. Buch "Optische Nachrichtentechnik", G. Grau, 2. verb. Auflage, Springer-Verlag Berlin, 1986, ISBN 3-540-15802-2, Kapitel 7.3.3, Seiten 296 bis 302).
- Die optische Dämpfungseinrichtung 7 ist z. B. ein handelsüblicher optischer Dämpfer.
- Der optische Schalter 5 ist z. B. ein elektrooptischer Modulator (ein Mach-Zehnder Modulator), der durch ein elektrisches Steuersignal so gesteuert werden kann, daß er Licht entweder sperrt oder durchläßt; er hat demnach die Funktion eines elektrisch gesteuerten optischen Schalters (s. R. G. Walker, "High-Speed III-V Semiconductor Intensity Modulators", IEEE Journal of Quantum Electronics, Vol. 27, No. 3, March 1991, Seiten 654 bis 667).
- Die optische Verzögerungseinrichtung 6 ist im einfachsten Fall ein Lichtwellenleiterstück. Licht benötigt eine gewisse Zeit, eine Verzögerungszeit, um dieses Lichtwellenleiterstück zu durchlaufen. Durch die Länge des Lichtwellenleiterstückes kann die Verzögerungszeit nach Wunsch eingestellt werden.
- Der optische Verstärker 11 ist z. B. ein mit Erbium-Ionen dotierter faseroptischer Verstärker (EDFA) (s. IEEE Journal of Lightwave Technology "Special Issue on Optical Amplifiers", Vol. 9, No. 2, February 1991, z. B. Seiten 147 bis 154), der aufgetretene Verluste in der optischen Leistung wieder ausgleicht.
- Der optische Begrenzer 12 ist vorzugsweise ein Lichtwellenleiterstück mit einem nichtlinearen Absorptionsverlauf, d. h. hohe optische Leistungen werden stärker absorbiert als kleine optische Leistungen. Aus DE-A1 42 29 292 ist ein solcher optischer Begrenzer bekannt: Ein Lichtwellenleiterstück ist so dotiert, daß in ihm Zwei-Photonen-Absorption erfolgt. Durch den optischen Begrenzer 12 wird die optische Leistung der einzelnen optischen Impulse des Datenstroms auf einen bestimmten Wert begrenzt.
- Der optische Entscheider 9 ist ein nichtlinearer optischer Absorber, das heißt am Ausgang tritt nur dann Licht aus, wenn die optische Eingangsleistung einen gegebenen Schwellenwert überschreitet. Ein solcher optischer Entscheider 9 ist z. B. aus der bereits in Verbindung mit der rein optisch arbeitenden Add-Drop-Einrichtung genannten Patentschrift EP-B1-0 385 430 bekannt.

In Fig. 1 sind der optische Verstärker 11 und der optische Begrenzer 12 als zwei diskrete Bauelemente gezeigt. Es ist jedoch auch bekannt, daß optische Verstärker und optische Halbleiterverstärker optische Signale sowohl verstärken als auch begrenzen können. Dies kann durch gezielte Festlegung des Arbeitspunktes erfolgen. Wird der Arbeitspunkt so gewählt, daß der optische Verstärker ab einer festgelegten optischen Eingangsleistung in die Sättigung übergeht, kommt es dadurch zu der gewünschten Begrenzung. Wird der optische Verstärker 11 so betrieben, ist kein optischer Begrenzer notwendig.

Alternativ dazu, daß der optische Entscheider 9 und der Photodetektor 10 im Zweig Z3 vorhanden sind, ist es auch möglich, daß an den Zweig Z3 z. B. ein passives optisches Netz angeschlossen ist. In diesem Fall können der optische Entscheider 9 und der Photodetektor 10 u. U. Teil eines an das Netzelement #3 angeschlossenen optischen Teilnetzes sein. Die eigentliche Funktion der Add-Drop-Einrichtung ist dadurch nicht betroffen.

Die Funktionsweise des optischen Ringnetzes wird im folgenden mit Hilfe von Fig. 2 erläutert, in der ein Zeitmultiplexsignal S_{MUX} (t) als Funktion der Zeit t dargestellt ist. Der optische Sender 2 sendet regelmäßig optische Impulse aus, die einen konstanten zeitlichen Impulsabstand T_{I} haben. In Fig. 2 sind davon zwei optische Impulse zu Zeiten T₂ und T₅ (T₂ < T₅) schraffiert eingezeichnet und es ist ein "Zeitfenster" von z. B. 6,43 ns Länge entsprechend einer Impulsfolgefrequenz von 155 MHz definiert. Diese von dem optischen Sender 2 ausgesendeten optischen Impulse werden im folgenden zur Unterscheidung von weiteren optischen Impulsen (Datenbits) als optische Zentralimpulse bezeichnet. Symmetrisch um diese optischen Zentralimpulse ist ein von optischen Impulsen freizuhaltendes Schutzband ("Guardband") festgelegt. Neben dem Schutzband ist ein sich daran anschließender nutzbarer Zeitabschnitt festgelegt, der für die weitere Beschreibung als Nutzband bezeichnet wird: Schutzband und Nutzband ergeben zusammen das "Zeitfenster". Mit den in Fig. 2 angegebenen Zeitpunkten ergibt sich mit T₁ < T₂ < T₃ < T₄ < T₅ folgende Situation: Das Schutzband liegt zwischen T₁ und T₃, das Nutzband zwischen T₃ und T₄, und das "Zeitfenster" zwischen T₁ und T₄. Der Impulsabstand T_{I} ist demnach gleich dem "Zeitfenster".

Ist in Fig. 1 die Anzahl der Netzelemente gleich 16, das heißt N = 16, ist das Nutzband in 16 Zeitschlitze TS1,..., TS16 aufzuteilen; jedem Netzelement #1, ..., #N ist ein Zeitschlitz TS1,..., TS16 zugeteilt, der durch die optische Verzögerungseinrichtung 6 vorgegeben ist. Jedes Netzelement #1,..., #N kann in den ihm zugeteilten Zeitschlitz TS1,..., TS16 ein (optisches) Datenbit einfügen. In Fig. 2 haben bereits alle 16 Netzelemente ein (optisches) Datenbit in ihren Zeitschlitz eingefügt. Dies geschieht wie folgt: Der optische Verzweiger 4 koppelt einen Teil der ankommenden optischen Leistung aus, und zwar unabhängig davon, ob es die optische Leistung eines optischen Zentralimpulses oder die eines optischen Datenbits (einer logischen 1) eines anderen Netzelements ist. Der nicht ausgekoppelte Teil wird durch die optische Dämpfungseinrichtung 7 gedämpft. Der elektrooptische Modulator 5 ist so ausgelegt, daß er nur dann Licht durchläßt, wenn ein Bit des Datensignals eine logische 1 ist.

Es werden also auch Datenbits ausgekoppelt, die von anderen Netzelementen #1,..., #N in die Zeitschlitze TS1,..., TS16 eingefügt worden sind. Jedes Netzelement #1,..., #N nützt jedoch nur die optischen Zentralimpulse, um das Datensignal zu übertragen. Eine das Datensignal liefernde Datensignalquelle ist deshalb synchron zu den optischen Zentralimpulsen, da nur der optische Zentralimpuls durch den elektrooptischen Modulator 5 moduliert, d. h. durchgelassen oder gesperrt werden soll. Ein durchgelassener optischer Zentralimpuls wird durch die optische Verzögerungseinrichtung 6 verzögert, damit er den dem Netzelement zugeteilten Zeitschlitz einnimmt. Durch den optischen Koppler 8 wird dieser durchgelassene und verzögerte optische Zentralimpuls zu dem nicht ausgekoppeltem Teil hinzugefügt.

Jedes Netzelement #1,..., #N kann auch aus dem Nutzband Daten (Datenbits) entnehmen. Dies geschieht wie folgt: Der optische Koppler 8 koppelt einen Teil des durch die optische Dämpfungseinrichtung 7 gedämpften optischen Datenstroms aus und führt diesen Teil dem optischen Entscheider 9 zu. Der optische Koppler 8 koppelt aber auch einen Teil des durch die optische Verzögerungseinrichtung 6 verzögerten optischen Zentralimpulses aus und führt diesen Teil ebenfalls dem optischen Entscheider 9 zu. Der verzögerte optische Zentralimpuls bestimmt, wie bereits erwähnt, den Zeitschlitz, aus dem Information (Datenbit) entnommen wird. Zu diesem Zeitpunkt tritt in den optischen Entscheider 9 eine optische Leistung ein (im Falle einer logischen 1), die oberhalb des festgelegten Schwellenwertes liegt, mit der Folge, daß aus dem optischen Entscheider 9 Licht austritt. Im Falle einer logischen 0 liegt die optische Leistung unterhalb des festgelegten Schwellenwertes. Dadurch kann die für dieses Netzelement bestimmte Information entnommen werden.

Das in Fig. 2 gezeigte Zeitmultiplexsignal S_{MUX} (t) wird vom optischen Empfänger 3 (Fig. 1) empfangen und ausgewertet. Der optische Empfänger 3 muß zum Empfang eines optischen Signals mit einer hohen Bitfolgefrequenz geeignet sein, da die im Datenstrom enthaltene Information im Nutzband eine Bitfolgefrequenz (hier z. B. eine Gesamtbitfolgefrequenz von 10 Gbit/s) hat, die größer als die Impulsfolgefrequenz (z. B. 155 MHz) der optischen Zentralimpulse ist. Der optische Empfänger 3 ist ebenfalls wie die einzelnen Netzelemente #1, ..., #N synchron mit den optischen Zentralimpulsen. Im optischen Empfänger 3 können somit die optischen Zentralimpulse von dem optischen Datenstrom unterschieden werden. Dadurch ist auch gewährleistet, daß eine Zuordnung der Netzelemente #1, ..., #N zu den Zeitschlitzen TS1, ..., TS16 eindeutig ist.

Soll in dem optischen Ringnetz die Gesamtbitfolgefrequenz weiter erhöht werden, das heißt sollen weitere Netzelemente in das optische Ringnetz eingefügt werden, so ist es z. B. ausreichend, den zentralen optischen Sender 2 gegen einen anderen auszutauschen, der kürzere optische Impulse aussendet. Dadurch werden die Zeitschlitze TS1,..., TS16 verkürzt, so daß im Nutzband Platz für die hinzugefügten Netzelemente entsteht.

## Patentansprüche

1. Optisches Ringnetz, bei dem eine Zentrale (1) und mehrere Netzelemente (#1, ..., #N) vorhanden sind, und bei dem in jedem der Netzelemente (#1, ..., #N) eine Add-Drop-Einrichtung vorhanden ist, durch die Information zu einem optischen Datenstrom hinzugefügt und aus diesem entnommen werden kann,
**dadurch gekennzeichnet , daß** in der Zentrale (1) ein einziger Laser (2) vorhanden ist, der optische Impulse einer festgelegten Impulsfolgefrequenz aussendet, so daß jeweils zwischen zwei aufeinanderfolgenden optischen Impulsen ein nutzbarer Zeitabschnitt festgelegt ist, in den die Netzelemente (#1, ..., #N) Information einfügen und entnehmen können.

2. Optische Add-Drop-Einrichtung eines Netzelements in einem optischen Ringnetz gemäß Anspruch 1,
**dadurch gekennzeichnet , daß** die Einrichtung einen optischen Verzweiger (4) hat, der einen ankommenden optischen Datenstrom auf zwei Zweige (Z1, Z2) aufteilt, daß die Einrichtung im zweiten Zweig (Z2) Modulationsmittel (5, 6) hat, die optische Impulse einer festgelegten Impulsfolgefrequenz welche von einer Zentrale (1) im optischen Ringnetz ausgesendet werden, so dass jeweils zwischen zwei aufeinanderfolgenden optischen Impulsen ein nutzbarer Zeitabschnitz festgelegt ist, in den die Netzelemente (#1,... #N) des optischen Ringnetzes Informationen einfügen und entnehmen können, in Abhängigkeit von einem Steuersignal sperren oder durchlassen und verzögern, daß die Einrichtung einen optischen Koppler (8) hat, der jeden durchgelassenen und verzögerten optischen Impuls teilweise in einen dritten Zweig (Z3) auskoppelt und teilweise in den ersten Zweig (Z1) einkoppelt, um so Information zum optischen Datenstrom hinzuzufügen, und daß der optische Koppler (8) einen Teil des sich im ersten Zweig (Z1) ausbreitenden optischen Datenstroms in den dritten Zweig (Z3) auskoppelt, in dem Detektionsmittel (9, 10) vorhanden sind, die aus dem optischen Datenstrom zu entnehmende Information detektieren.

3. Optisches Ringnetz nach Anspruch 1, **dadurch gekennzeichnet, daß** die Einrichtung einen optischen Verzweiger (4) hat, der den optischen Datenstrom auf zwei Zweige (Z1, Z2) aufteilt, daß die Einrichtung im zweiten Zweig (Z2) Modulationsmittel (5, 6) hat, die jeden optischen Impuls in Abhängigkeit von einem zur Impulsfolgefrequenz synchronen Steuersignal sperren oder durchlassen und verzögern, daß die Einrichtung einen optischen Koppler (8) hat, der jeden durchgelassenen und verzögerten optischen Impuls teilweise in einen dritten Zweig (Z3) auskoppelt und teilweise in den ersten Zweig (Z1) einkoppelt, um so Information zum optischen Datenstrom hinzuzufügen, und daß der optische Koppler (8) zudem einen Teil des sich im ersten Zweig (Z1) ausbreitenden optischen Datenstroms in den dritten Zweig (Z3) auskoppelt, in dem Detektionsmittel (9, 10) vorhanden sind, die aus dem optischen Datenstrom zu entnehmende Information detektieren.

4. Optisches Ringnetz nach Anspruch 3 oder optische Add-Drop-Einrichtung nach Anspruch 2, **dadurch gekennzeichnet, daß** die Modulationsmittel (5, 6) aus einem optischen Schalter (5) und einer optischen Verzögerungseinrichtung (6) bestehen, und daß die Detektionsmittel (9, 10) aus einem optischen Entscheider (9) und einem Photodetektor (10) bestehen.

5. Optisches Ringnetz nach Anspruch 3 oder 4, oder optische Add-Drop-Einrichtung nach Anspruch 2, **dadurch gekennzeichnet, daß** im ersten Zweig (Z1) zwischen dem optischen Verzweiger (4) und dem optischen Koppler (8) eine optische Dämpfungseinrichtung (7) vorhanden ist, daß im ersten Zweig (Z1) außerdem ein optischer Verstärker (11) und ein optischer Begrenzer (12) vorhanden sind, die den vom optischen Koppler (8) kommenden gedämpften optischen Datenstrom verstärken und auf eine festgelegte maximale optische Ausgangsleistung begrenzen.

6. Optisches Ringnetz nach einem der Ansprüche 1, 3, 4 oder 5, **dadurch gekennzeichnet, daß** in der Zentrale (1) ein optischer Empfänger vorhanden ist, der den optischen Datenstrom empfängt.

## Claims

1. Optical ring network in which a centre (1) and a plurality of network elements (#1, ..., #N) are present and in which there is present in each of the network elements (#1, ..., #N) an add-drop device that can insert information into an optical data stream and extract it from the latter, **characterized in that** there is present in the centre (1) a single laser (2) that emits optical pulses of a specified pulse repetition frequency so that there is established between every two consecutive optical pulses a usable time segment into which the network elements (#1, ..., #N) can insert information and extract it.

2. Optical add-drop device of a network element in an optical ring network according to Claim 1, **characterized in that** the device has an optical splitter (4) that divides an incoming optical data stream into two branches (Z1, Z2), **in that** the device has, in the second branch (Z2), modulation means (5, 6) that, depending on a control signal, block or transmit and delay optical pulses of a specified pulse repetition frequency that are emitted by a centre (1) in the optical ring network so that there is established between every two consecutive optical pulses a usable time segment in which the network elements (#1, ..., #N) of the optical ring network can insert and extract information items, **in that** the device has an optical coupler (8) that partly couples out each transmitted and delayed optical pulse into a third branch (Z3) and partly couples it into the first branch (Z1) in order in this way to insert information into the optical data stream, and **in that** the optical coupler (8) couples out a part of the optical data stream propagating in the first branch (Z1) into the third branch (Z3) in which detection means (9, 10) are present that detect information to be extracted from the optical data stream.

3. Optical ring network according to Claim 1, **characterized in that** the device has an optical splitter (4) that divides the optical data stream into two branches (Z1, Z2), **in that** the device has in the second branch (Z2) modulation means (5, 6) that, depending on a control signal synchronous with the pulse repetition frequency, block or transmit and delay each optical pulse, **in that** the device has an optical coupler (8) that partly couples out each transmitted and delayed optical pulse into a third branch (Z3) and partly couples it into the first branch (Z1) in order to insert information into the optical data stream, and **in that** the optical coupler (8) in addition couples out a part of the optical data stream propagating in the first branch (Z1) into the third branch (Z3) in which there are present detection means (9, 10) that detect information to be extracted from the optical data stream.

4. Optical ring network according to Claim 3 or optical add-drop device according to Claim 2, **characterized in that** the modulation means (5, 6) comprise an optical switch (5) and an optical delay device (6) and **in that** the detection means (9, 10) comprise an optical decision device (9) and a photodetector (10).

5. Optical ring network according to Claim 3 or 4, or optical add-drop device according to Claim 2, **characterized in that** there is present in the first branch (Z1) between the optical splitter (4) and the optical coupler (8) an optical attenuator (7), and **in that**, in addition, there are present in the first branch (Z1) an optical amplifier (11) and an optical limiter (12) that amplify the attenuated optical data stream coming from the optical coupler (8) and limit it to a specified maximum optical output power.

6. Optical ring network according to any one of Claims 1, 3, 4 or 5, **characterized in that** there is present in the centre (1) an optical receiver that receives the optical data stream.

## Revendications

1. Réseau annulaire optique, sur lequel une centrale (1) et plusieurs éléments de réseau (#1,..., #N) sont présents, et sur lequel est présent dans chacun des éléments de réseau (#1,..., #N) un appareil Add-Drop par lequel de l'information est ajoutée à un flux de données optique et peut être prélevée dans celui-ci,
**caractérisé en ce qu'**il y a dans la centrale (1) un seul laser (2) qui envoie des impulsions optiques d'une fréquence fixée de répétition d'impulsions, de sorte qu'une période de temps utilisable, dans laquelle les éléments de réseau (#1, ..., #N) peuvent insérer et retirer de l'information, est définie respectivement entre deux impulsions optiques successives.

2. Appareil Add-Drop optique d'un élément de réseau dans un réseau annulaire optique selon la revendication 1, **caractérisé en ce que** l'appareil a un élément de dérivation (4) optique qui subdivise un flux de données optique arrivant en deux branches (Z1, Z2) de telle sorte que l'appareil a dans la seconde branche (Z2) des moyens de modulation (5, 6) qui bloquent ou laissent passer des impulsions optiques d'une fréquence fixée de répétition d'impulsions, qui sont émises par une centrale (1) dans des réseaux annulaires optiques, de sorte que respectivement entre deux impulsions optiques successives est définie une période de temps utilisable dans laquelle les éléments de réseau (#1, ..., #N) du réseau annulaire optique peuvent insérer et retirer de l'information, en fonction d'un signal de commande, **en ce que** l'appareil a un coupleur (8) optique, qui enlève toute impulsion optique passée et retardée en partie dans une troisième branche (Z3) et l'envoie partiellement dans la première branche (Z1), afin d'ajouter ainsi de l'information au flux de données optique, et **en ce que** le coupleur (8) optique enlève une partie du flux de données optique se propageant dans la première branche (Z1) dans la troisième branche (Z3), dans laquelle sont présents des moyens de détection (9, 10) qui détectent de l'information à enlever du flux de données optique.

3. Réseau annulaire optique selon la revendication 1, **caractérisé en ce que** l'appareil a un élément de dérivation (4) optique, qui divise le flux de données optique en deux branches (Z1, Z2), **en ce que** l'appareil a dans la seconde branche (Z2) des moyens de modulation qui bloquent ou laissent passer et retardent toute impulsion optique en fonction d'un signal de commande synchrone avec la fréquence de répétition d'impulsions, **en ce que** l'appareil a un coupleur (8) optique qui enlève toute impulsion optique passée et retardée en partie dans une troisième branche (Z3) et l'envoie en partie dans la première branche (Z1), afin d'ajouter ainsi de l'information au flux de données optique, et **en ce que** le coupleur (8) optique enlève également une partie du flux de données optique se répartissant dans la première branche (Z1) dans la troisième branche (Z3), dans laquelle sont présents des moyens de détection (9, 10) qui enlèvent de l'information dans le flux de données optique.

4. Réseau annulaire optique selon la revendication 3 ou appareil Add-Drop optique selon la revendication 2, **caractérisé en ce que** les moyens de modulation (5, 6) comprennent un interrupteur (5) optique et un appareil de temporisation (6) optique et **en ce que** les moyens de détection (9, 10) comprennent un élément de décision (9) optique et un photodétecteur (10).

5. Réseau annulaire optique selon la revendication 3 ou 4, ou appareil Add-Drop optique selon la revendication 2, **caractérisé en ce qu'**un appareil d'amortissement (7) optique est présent dans la première branche (Z1) entre l'élément de dérivation (4) optique et le coupleur (8) optique, **en ce qu'**un amplificateur (11) optique et un limiteur (12) optique sont présents également dans la première branche (Z1), lesquels amplifient le flux de données optique amorti arrivant du coupleur (8) optique et le limitent à une puissance de sortie optique maximale définie.

6. Réseau annulaire optique selon l'une quelconque des revendications 1, 3, 4 ou 5, **caractérisé en ce qu'**un récepteur optique, qui reçoit le flux de données optique, est présent dans la centrale (1).
